Europäisches Patentamt

European Patent Office

Office européen des brevets

(19)

(11) Numéro de publication: **0 094 301**
**B1**

(12) **FASCICULE DE BREVET EUROPEEN**

(45) Date de publication du fascicule du brevet:
02.04.86

(51) Int. Cl.⁴: **H 02 G 3/26**

(21) Numéro de dépôt: **83400900.3**

(22) Date de dépôt: **04.05.83**

(54) Canalisation souple, notamment pour câble électrique ou téléphonique.

(30) Priorité: **04.05.82 FR 8207700**

(43) Date de publication de la demande:
**16.11.83 Bulletin 83/46**

(45) Mention de la délivrance du brevet:
**02.04.86 Bulletin 86/14**

(84) Etats contractants désignés:
**BE CH DE GB IT LI**

(56) Documents cités:
**CH - A - 368 530**
**CH - A - 585 473**
**DE - A - 1 910 241**
**DE - C - 942 815**
**FR - A - 2 031 874**
**FR - E - 81 183**

(73) Titulaire: **Bretegnier, Pierre Henri André, 505 Rue des Moulins Le Gravelot Chaussée d'Ivry, F-28260 Anet (FR)**

(72) Inventeur: **Bretegnier, Pierre Henri André, 505 Rue des Moulins Le Gravelot Chaussée d'Ivry, F-28260 Anet (FR)**

(74) Mandataire: **CABINET BONNET-THIRION, 95 Boulevard Beaumarchais, F-75003 Paris (FR)**

ACTORUM AG

# Description

La présente invention concerne de manière générale des canalisations souples, telles que celles intervenant dans les installations de distribution d'énergie ou de télécommunication. Elle concerne plus précisément le profil de celles de ces canalisations qui sont destinées à être fixées par collage sur un support.

Une telle fixation par collage est particulièrement intéressante lorsque le support en cause est très dur, ou au contraire très friable, auquel cas l'utilisation de crochets ou de cavaliers s'avère très malaisée et/ou inefficace. Il faut alors faire intervenir un outillage spécial, ou procéder à une préparation de la surface, à moins donc de procéder par collage.

Les câbles électriques ou téléphoniques adaptés à une fixation par collage, tels qu'ils sont connus à ce jour d'après les documents CH-A N° 368530 et FR-E N° 81.183 par exemple, présentent une surface plane ou globalement plane, éventuellement porteuse d'un adhésif protégé par un ruban protecteur, ou sur laquelle on applique un jonc de colle avant sa fixation sur un support. Un tel profil plan de la surface de collage rend bien des services, en présentant cependant les inconvénients suivants. Dans le cas du préencollage d'un adhésif, ce dernier présente généralement une épaisseur assez faible, susceptible de vieillir assez vite malgré la présence de son ruban protecteur, ce qui conduit à une fiabilité assez faible concernant le collage dès que l'état de surface du support de fixation n'est pas excellent. Par ailleurs, en cas d'application d'un jonc de colle sur la face plane juste avant la fixation du câble, on peut difficilement éviter que ne se produisent localement des débordements de colle, ce qui nuit à l'esthétique finale de l'installation. Enfin, en vue d'utiliser des couches d'adhésif ou de colle d'épaisseur minimale, les profils des câbles à coller ont été le plus souvent conçus de manière à présenter une surface maximale de collage, et présentent de ce fait une faible épaisseur perpendiculairement à la surface de collage, ainsi qu'il ressort notamment des documents FR-A N° 2031874, CH-A N° 368530 et FR-E N° 81.183.

Plutôt que de fixer directement des câbles sur un support, il est également connu de mettre en œuvre des organes intermédiaires de maintien des fils ou câbles électriques, ainsi qu'il ressort notamment des documents CH-A N° 585473 et DE-A N° 1910241 qui décrivent respectivement des baguettes fixées par adhésif et des socles fixés par de la colle qui forme des points d'ancrage au travers desdits socles. Ces organes intermédiaires, qui présentent des caractéristiques fort différentes de celles de fils et câbles électriques, donnent lieu aux mêmes inconvénients que précédemment concernant la fiabilité et l'esthétique de leur collage sur un support.

La présente invention a pour but de pallier ces inconvénients et propose à cet effet une canalisation souple, en particulier pour câble électrique de télécommunications ou de distribution d'énergie, du genre comportant une semelle de fixation par collage sur un support, et dont l'épaisseur, mesurée perpendiculairement à ladite semelle, est au moins égale à sa largeur, caractérisée en ce que ladite semelle est profilée en creux de façon à former un piège à colle pour une substance de collage.

Une telle surface de collage ou semelle en creux permet d'assurer sans débordement la mise en œuvre de quantités de colle parfois importantes, à l'égard desquelles elle se comporte comme un piège à colle. Un tel profil de canalisation permet donc de concilier fiabilité de collage et esthétique. La force de collage est en outre améliorée par un effet de ventouse que provoque la concavité de ladite semelle. La possibilité de faire intervenir proprement des quantités importantes de colle autorise une fixation fiable de câbles ou canalisations présentant en coupe transversale une épaisseur égale ou supérieure à la largeur de la zone de collage.

L'invention s'applique donc tout particulièrement à des câbles ou canalisations cylindriques dont on sait qu'ils peuvent être coudés sans nécessiter, comme pour les câbles de section rectangulaire, l'intervention de quelconques boîtes de raccordement ou de dérivation.

Les caractéristiques et avantages de l'invention ressortent de la description qui suit, donnée à titre d'exemple non limitatif, en regard des dessins annexés sur lesquels:

les fig. 1 à 3 sont des coupes transversales de variantes de réalisation de canalisations souples selon l'invention;

les fig. 4 et 5 sont des vues schématiques des étapes de fixation sur un support de canalisations souples selon l'invention, préencollées ou non.

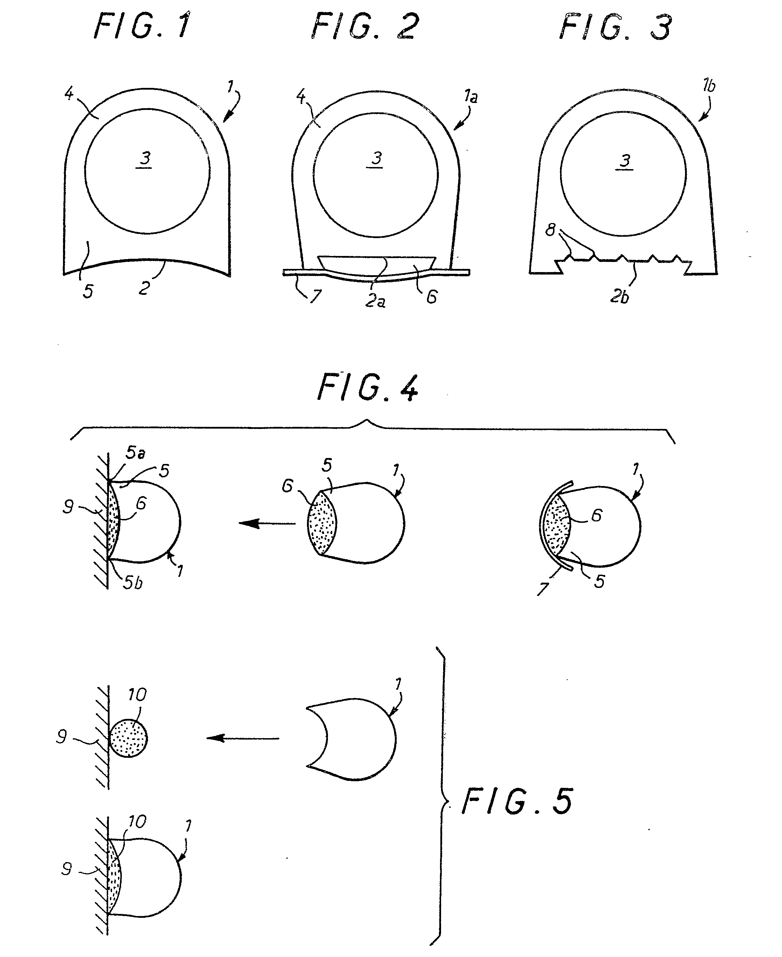

Les variantes de réalisation de canalisations souples 1, selon l'invention, illustrées par les fig. 1 à 3, ont en commun de présenter axialement, sur toute leur longueur, une surface ou semelle en creux adaptée à recevoir une substance de collage puis à être plaquée contre un support de fixation (non représenté).

La fig. 1 illustre un profil très simple de canalisation souple destinée à servir de gainage à une âme 3, par exemple constituée d'une pluralité de conducteurs (non représentés). La gaine présente une portion sensiblement circulaire 4 dont est solidaire, venu de matière avec elle, un talon 5 portant la semelle 2. Cette dernière, concave, affecte un faciès lisse en secteur angulaire de cylindre. Il est à noter que le talon 5 et la semelle 2 ont des largeurs sensiblement égales au diamètre extérieur de la portion circulaire 4, conférant à la canalisation 1 un profil extérieur rappelant celui d'une borne kilométrique routière. Il est à remarquer par ailleurs que la hauteur de la canalisation est sensiblement supérieure audit diamètre, en raison de l'épaisseur du talon 5.

La fig. 2 illustre une variante de réalisation ne différant de la précédente que par le fait que la semelle en creux, ici notée 2a, est profilée en queue d'aronde. La canalisation, notée 1a, est ici de type préencollé; une couche 6 de substance de collage

2

remplit en effet la rainure en queue d'aronde présentée par la semelle 2a. Cette couche de colle 6 est protégée de l'environnement par un ruban protecteur 7.

La fig. 3 illustre un profil comparable à celui de la fig. 2, le fond de la semelle 2b profilée en queue d'aronde présentant des stries axiales 8 destinées à améliorer la solidarisation d'un jonc de colle à la canalisation 1b. De telles stries sont bien entendu avantageusement ménagées dans n'importe quel type de semelle en creux, simplement concave ou de forme plus compliquée.

La fig. 4 illustre le mode d'utilisation d'une canalisation souple selon l'invention, ayant subi un traitement de préencollage. La fixation du câble 1 s'effectue par enlèvement du ruban protecteur 7 puis par pressage du talon 5 préencollé sur un support 9. Il est à remarquer que ce passage tend à écarter les arêtes axiales 5a et 5b dudit talon, d'où une augmentation de la surface finale de collage. Il est particulièrement avantageux d'utiliser une substance de collage réactivable par chauffage pour ne pas se heurter à des difficultés liées à un séchage prématuré en stockage.

La fig. 5 illustre le mode d'utilisation d'une canalisation souple 1 selon l'invention non encollée, avec adjonction d'un jonc de colle 10 au moment de sa fixation sur le support 9. Aucun problème de séchage de colle ne se pose alors. On applique en un premier temps le jonc de colle sur le support 9 et on l'y presse légèrement pour assurer une légère fixation. On presse ensuite, comme précédemment, la canalisation 1 vers le support, en écrasant le jonc de colle, ce qui entraîne ici encore un écartement des arêtes axiales 5a et 5b et une augmentation de la surface de collage. On peut, bien sûr, tout aussi bien appliquer d'abord le jonc de colle sur la canalisation, plutôt que sur le support. Par ailleurs, le profil de canalisation illustré sur les fig. 4 et 5 n'est qu'indicatif. Les deux modes de fixation que ces figures représentent sont bien sûr valables pour toute canalisation souple dotée d'une semelle en creux telle que le recommande l'invention.

Il est bien entendu que l'expression semelle en creux est à comprendre dans son sens le plus général. Il est le plus souvent préférable, pour des questions de facilité de fabrication, que des canalisations souples selon l'invention présentent un même profil sur toute leur longueur. Il est cependant envisageable que ce ne soit pas le cas, sans sortir pour autant du cadre de l'invention, en ménageant par exemple des alvéoles de forme quelconque.

Il est à noter par ailleurs que, bien que l'âme 3 dans la fig. 1 ait été citée comme constituée par exemple d'une pluralité de conducteurs, l'invention peut être appliquée à des canalisations souples dont l'âme peut être solide, liquide ou gazeuse.

## Revendications

1. Canalisation souple, en particulier pour câble électrique, du genre comportant une semelle de fixation (2) par collage sur un support (9), et dont l'épaisseur, mesurée perpendiculairement à ladite semelle (2), est au moins égale à sa largeur, caractérisée en ce que ladite semelle (2) est profilée en creux de façon à former un piège à colle pour une substance de collage (6, 10).

2. Canalisation selon la revendication 1, caractérisée en ce que ladite semelle (2) fait ventouse, avec écartement de ses bords latéraux lors de l'opération de collage de ladite canalisation sur le support (9).

3. Canalisation souple selon l'une des revendications 1 ou 2, caractérisée en ce que son profil comporte une portion sensiblement circulaire (4) en prolongement d'un talon (5) portant ladite semelle en creux (2).

4. Canalisation souple selon la revendication 3, caractérisée en ce que ledit talon (5) et ladite semelle (2) ont des largeurs sensiblement égales au diamètre extérieur de la portion sensiblement circulaire (4).

5. Canalisation souple selon l'une des revendications 1 à 4, caractérisée en ce que ladite semelle en creux (2) est concave, formée d'un secteur angulaire de cylindre.

6. Canalisation souple selon l'une des revendications 1 à 4, caractérisée en ce que la semelle en creux (2) comporte une rainure en queue d'aronde (2a) adaptée à recevoir la substance de collage (6).

7. Canalisation souple selon l'une des revendications 1 à 6, caractérisée en ce que la semelle en creux (2) comporte des stries axiales (8).

8. Canalisation souple selon l'une des revendications 1 à 6, caractérisée en ce que la substance de collage (6) est précollée sur la semelle avant fixation sur un support et protégée par un ruban protecteur (7).

9. Canalisation souple selon la revendication 8, caractérisée en ce que la substance de collage (6) est réactivable par chauffage.

## Patentansprüche

1. Geschmeidige Leitung, besonders für elektrisches Kabel, des Typs, der eine Befestigungssohle (2) zum Ankleben an einer Stütze (9) besitzt, und wobei die Stärke, senkrecht zu der Sohle (2) gemessen, mindestens gleich der Breite ist, dadurch gekennzeichnet, dass die Sohle (2) hohl profiliert ist, derart, dass eine Klebstoff-Falle für eine Klebemittelsubstanz (6, 10) gebildet ist.

2. Leitung nach Anspruch 1, dadurch gekennzeichnet, dass die Sohle (2) einen Saugnapf bildet, mit Spreizen der Seitenwände während des Anklebevorgangs der Leitung an der Stütze (9).

3. Geschmeidige Leitung nach Anspruch 1 oder 2, dadurch gekennzeichnet, dass ihr Profil einen im wesentlichen kreisförmigen Abschnitt (4) in Verlängerung eines die Hohlsohle (2) tragenden Fusses (5) besitzt.

4. Geschmeidige Leitung nach Anspruch 3, dadurch gekennzeichnet, dass der Fuss (5) und die Sohle (2) im wesentlichen dem Aussendurchmesser des im wesentlichen kreisförmigen Abschnittes (4) gleiche Breiten besitzt.

5. Geschmeidige Leitung nach einem der Ansprüche 1 bis 4, dadurch gekennzeichnet, dass die Hohl-Sohle (2) konkav ist und aus einem Winkelsektor eines Zylinders gebildet ist.

6. Geschmeidige Leitung nach einem der Ansprüche 1 bis 4, dadurch gekennzeichnet, dass die Hohl-Sohle (2) einen schwalbenschwanzförmigen Einschnitt (2a) besitzt, ausgelegt zur Aufnahme der Klebemittelsubstanz (6).

7. Geschmeidige Leitung nach einem der Ansprüche 1 bis 6, dadurch gekennzeichnet, dass die Hohl-Sohle (2) Axial-Rillen (8) besitzt.

8. Geschmeidige Leitung nach einem der Ansprüche 1 bis 6, dadurch gekennzeichnet, dass die Klebemittelsubstanz (6) an der Sohle vor ihrer Befestigung an einer Stütze aufgeleimt und durch ein Schutzband (7) geschützt ist.

9. Geschmeidige Leitung nach Anspruch 8, dadurch gekennzeichnet, dass die Klebemittelsubstanz (6) durch Erwärmen reaktivierbar ist.


**Claims**

1. Flexible ducting, in particular for an electric cable, of the type comprising a base (2) for fixing by glueing to a support (9) and whose thickness as measured perpendicularly to said base (2) is at least equal to its width, characterized in that said base (2) is of a hollow configuration so as to form a glue trap for a glueing substance (6, 10).

2. Ducting according to Claim 1, characterized in that said base (2) acts as a suction cup, with the side edges thereof moving apart in the operation of glueing said ducting to the support (9).

3. Flexible ducting according to Claim 1 or 2, characterized in that the profile thereof comprises a substantially circular portion (4) extending a heel portion (5) carrying said base (2) of a hollow configuration.

4. Flexible ducting according to Claim 3, characterized in that said heel portion (5) and said base (2) are of widths substantially equal to the outside diameter of the substantially circular portion (4).

5. Flexible ducting according to any one of Claims 1 to 4, characterized in that said hollow base (2) is concave, formed by an angular sector of a cylinder.

6. Flexible ducting according to any one of Claims 1 to 4, characterized in that the base (2) of a hollow configuration comprises a dovetail groove (2a) adapted to receive the glueing substance (6).

7. Flexible ducting according to any one of Claims 1 to 6, characterized in that the base (2) of a hollow configuration comprises axial flutes (8).

8. Flexible ducting according to any one of Claims 1 to 6, characterized in that the glueing substance (6) is pre-glued on the base before fixing to a support and protected by a protective strip (7).

9. Flexible ducting according to Claim 8, characterized in that the glueing substance (6) can be reactivated by heating.

FIG. 1    FIG. 2    FIG. 3

FIG. 4

FIG. 5